# EUROPEAN PATENT APPLICATION

(11) **EP 4 647 593 A1**
(43) Date of publication of application: **12.11.2025**
(21) Application number: 24174731.0
(22) Date of filing: 08.05.2024
(51) Int. Cl.: F02D 19/02, F02D 41/00, F02M 21/02

(54) **A FUEL STORAGE AND SUPPLY SYSTEM FOR A VEHICLE**

(71) Applicant: VOLVO TRUCK CORPORATION, 405 08 Göteborg (SE)
(72) Inventor: BABAYEV, Rafag, 414 78 GÖTEBORG (SE); BHAVANI SHANKAR, Vijai Shankar, 414 78 GÖTEBORG (SE)
(74) Representative: Kransell & Wennborg KB

(57) **Abstract**

A fuel storage and supply system (10) for a vehicle (1), the fuel storage and supply system comprising: a first fuel storage tank arrangement (12) for storing pressurized fuel (13), the first fuel storage tank arrangement having at least one fuel storage tank volume (12a to 12n); a first fuel conduit arrangement (20) configured to be in fluid communication with the first fuel storage tank arrangement, and further configured to be in fluid communication with a fuel-consuming power source (16); a second fuel storage tank arrangement (14) for storing pressurized fuel (13), the second fuel storage tank arrangement having at least one corresponding fuel storage tank volume (14a to 14n); a second fuel conduit arrangement (40) configured to be in fluid communication with the second fuel storage tank arrangement, and further configured to be in fluid communication with the fuel-consuming power source; a fuel supply control system (80), the fuel supply control system comprising a first fuel control valve arrangement (30) disposed in the first fuel conduit arrangement and having a fuel control valve (31) configured to regulate a flow of the pressurized fuel in the first fuel conduit arrangement, and a second fuel control valve arrangement (35) disposed in the second fuel conduit arrangement and having a corresponding fuel control valve (36) configured to regulate a flow of the pressurized fuel in the second fuel conduit arrangement; and wherein the fuel supply control system (80) comprises a controller (85) having processing circuitry (82) configured to control flow of fuel through the first fuel conduit arrangement and second fuel conduit arrangement by controlling any one of the fuel control valve and the corresponding fuel control valve.

## Description

### TECHNICAL FIELD

The disclosure relates generally to fuel storage and supply systems for vehicles. In particular aspects, the disclosure relates to a fuel storage and supply system for an internal combustion engine of a vehicle. In other aspects, the disclosure relates to a fuel storage and supply system for a fuel cell system of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The utilization of alternative fuels, such as hydrogen gas or natural gas, including both LNG and CNG, as a clean and sustainable fuel source for internal combustion engines is one of many examples considered in the heavy-duty vehicle industry. By way of example, natural gas is recognized for its reduced carbon emissions, improved air quality, and cost-efficiency compared to conventional gasoline or diesel fuels. Moreover, hydrogen gas may not only be used as a fuel for an ICE system but can also be utilized as a fuel component for vehicles having a fuel cell system.

However, using such alternative fuels in a vehicle may present several new challenges on the fuel supply system in comparison with other more traditional fuels. One of these challenges relates to the storage of fuel (e.g. hydrogen gas) in the vehicle and the supply of the fuel to the ICE and/or the fuel cell system. In this context, the ICE and the fuel cell system are two examples of fuel-consuming power sources. By way of example, delivering hydrogen to such fuel-consuming power sources at the correct pressure involves addressing specific challenges related to the compression, storage, and transportation of hydrogen.

Conventional hydrogen fuel storage systems for heavy-duty vehicles may generally include on-board high-pressure tanks, typically pressurized at about 700 bar. However, fuel injection processes in both fuel cell systems and ICE systems, e.g. spark-ignited ICE systems, may occur at substantially lower pressures ranging from 6 to 20 bar. In other words, the fuel, such as hydrogen, needs to be delivered to the fuel-consuming power source at a suitable pressure level. While the fuel supply system may include a pressure regulation system to ensure that the gas is supplied at the right pressure level, there is still a need for further development in order to provide an efficient delivery of compressed hydrogen to a fuel-consuming power source, such as an ICE or a fuel cell system of a heavy-duty vehicle.

### SUMMARY

According to a first aspect of the disclosure, there is provided a fuel storage and supply system for a vehicle. The fuel storage and supply system comprises a first fuel storage tank arrangement for storing pressurized fuel, the first fuel storage tank arrangement having at least one fuel storage tank volume for the pressurized fuel; a first fuel conduit arrangement configured to be in fluid communication with the first fuel storage tank arrangement, and further configured to be in fluid communication with a fuel-consuming power source; a second fuel storage tank arrangement for storing pressurized fuel, the second fuel storage tank arrangement having at least one corresponding fuel storage tank volume for the pressurized fuel; a second fuel conduit arrangement configured to be in fluid communication with the second fuel storage tank arrangement, and further configured to be in fluid communication with the fuel-consuming power source; a fuel supply control system, the fuel supply control system comprising a first fuel control valve arrangement disposed in the first fuel conduit arrangement and having a fuel control valve configured to regulate a flow of the pressurized fuel in the first fuel conduit arrangement, and a second fuel control valve arrangement disposed in the second fuel conduit arrangement and having a corresponding fuel control valve configured to regulate a flow of the pressurized fuel in the second fuel conduit arrangement. Moreover, the fuel supply control system comprises a controller having processing circuitry configured to control flow of fuel through the first fuel conduit arrangement and the second fuel conduit arrangement by controlling any one of the fuel control valve and the corresponding fuel control valve in response to a comparison between a fuel supply characteristics level associated with the at least one fuel storage tank volume of the first fuel storage tank arrangement, a fuel supply characteristics level associated with the at least one fuel storage tank volume of the second fuel storage tank arrangement and a demanded fuel delivery characteristics level associated with the fuel-consuming power source.

The first aspect of the disclosure may seek to enhance energy efficiency within a fuel storage and supply system for a vehicle including at least one fuel-consuming power source in the form of an internal combustion engine and/or a fuel cell system. In particular, the disclosure may seek to provide a fuel storage and supply system that enhances the operational efficiency of vehicles by improving fuel economy and reducing emissions.

A technical benefit may include the reduction of fuel consumption and emissions by ensuring that the fuel supply is closely matched to the demands of the power source, reducing wastage and inefficiencies. The pressurized fuel is typically pressurized hydrogen fuel. In addition, the proposed fuel storage and supply system may provide for improving the control of the pressure levels of the pressurized fuel during varying operating conditions of the fuel-consuming power source and the vehicle. By adapting to changes in driving conditions and fuel characteristics, the system may further enhance the adaptability of the vehicle to different environments and operational requirements. More specifically, the proposed fuel storage and supply system may at least partly mitigate the problems with undesired delay to reach demanded fuel injection pressures for the internal combustion engine and/or the fuel cell system.

In some examples, where the fuel storage and supply system may be an integral part of a powertrain system, the disclosure may contribute to an improved fuel efficiency of the powertrain system.

The fuel storage and supply system may be particularly useful for a powertrain system including an internal combustion engine and any one of a low-pressure direct injection fuel system, a port fuel injection system, an intake manifold fuel injection, and/or a combination thereof. The fuel storage and supply system may also be particularly useful for a powertrain system including a compression-ignited high-pressure direct injection internal combustion engine. Such engines may also include a direct injection fuel system, a port fuel injection system, an intake manifold fuel injection, and/or a combination thereof. The fuel storage and supply system may also be particularly useful for dual-fuel compression-ignited internal combustion engines, operating on e.g. diesel and hydrogen or diesel and methane.

The fuel storage and supply system may also be useful for internal combustion engines such as spark-ignited internal combustion engines, including spark-ignited high-pressure direct injection internal combustion engines.

Optionally in some examples, including in at least one preferred example, the demanded fuel delivery characteristics level associated with the fuel-consuming power source may be any one of a demanded fuel injection pressure for the fuel-consuming power source and a demanded fuel flow rate for the fuel-consuming power source.

Optionally in some examples, including in at least one preferred example, the demanded fuel delivery characteristics level associated with the fuel-consuming power source may be determined in response to an upcoming vehicle operation. A technical benefit may include the ability to dynamically adjust the fuel supply based on imminent operational needs of the vehicle, thereby enhancing fuel consumption and improving energy efficiency during varying driving conditions.

Optionally in some examples, including in at least one preferred example, the demanded fuel delivery characteristics level associated with the fuel-consuming power source may be determined based on transport mission data, the transport mission data containing at least gross combined weight of the vehicle and topology data of an intended route for the transport mission. A technical benefit may include providing enhanced fuel efficiency and performance by pre-adjusting the fuel system settings according to the specific demands of the upcoming transport mission, considering factors like vehicle load and route topography, which may typically affect fuel consumption rates.

Optionally in some examples, including in at least one preferred example, the controller may be configured to receive real-time data on pressure changes in the at least one fuel storage tank volume of the first fuel storage tank arrangement and the at least one fuel storage tank volume of the second fuel storage tank arrangement, and further to adapt the control of any one of the fuel control valve and the corresponding fuel control valve in response to the pressure changes. A technical benefit may include enhanced responsiveness of the fuel supply system to changes in fuel tank pressure, leading to more stable fuel delivery and improved engine or fuel cell system efficiency. Such configuration may also contribute to reducing the risk of performance drops or inefficiencies caused by pressure variations. Another technical benefit may include providing a more reliable response by the system to the demand(s) of the fuel-consuming power source.

Optionally in some examples, including in at least one preferred example, the fuel storage and supply system may further comprise a compressor disposed in a bridging fuel conduit extending between the first fuel conduit arrangement and the second fuel conduit arrangement, the bridging fuel conduit being arranged to provide fluid communication between the first fuel conduit arrangement and the second fuel conduit arrangement at a position upstream the fuel control valve and at a position upstream the corresponding fuel control valves. A technical benefit may include enhanced fuel pressure management, allowing for more dynamic balancing between different sections of the system. Such arrangement contributes to more consistent pressure and flow rates to the fuel-consuming power source, which may be beneficial for maintaining performance and fuel efficiency. The ability to adjust pressure across the system may also help to mitigate potential issues related to fuel supply fluctuations, thus ensuring a more reliable and stable operation of the power system. Another technical benefit may include allowing one of the group of fuel tanks to be used as accumulator tanks. In such configuration, it may become possible to use a smaller compressor that on its own cannot always meet the demand(s) of the fuel-consuming power source. The configuration of the compressor may also extend the duration during which adaptive fuel delivery at varying pressure levels to the fuel-consuming power source can be sustained.

Optionally in some examples, including in at least one preferred example, the controller may be configured to control the compressor in response to a fuel pressure of the fuel in the at least one fuel storage tank volume of the first fuel storage tank arrangement and a fuel pressure of the fuel in the at least one fuel storage tank volume of the second fuel storage tank arrangement. A technical benefit may include improved management of the fuel pressure between different tank volumes, allowing for maintaining more consistent fuel supply and pressure levels during operation of the vehicle.

Optionally in some examples, including in at least one preferred example, the system may further comprise a heat exchanger disposed in the bridging fuel conduit and configured to regulate a temperature of the pressurized fuel from the compressor. A technical benefit may include providing the ability to maintain an appropriate fuel temperature, which can improve combustion efficiency in an internal combustion engine or operational efficiency in a fuel cell system as well as to ensure that the temperature of pressurized fuel is below any rated temperature of the components making up the system, such as the rated temperature ranges of the conduits, pipes, seals, valves, and the fuel storage tanks. Temperature regulation may further help in maintaining the chemical integrity and flow characteristics of the fuel.

Optionally in some examples, including in at least one preferred example, the fuel storage and supply system may further comprise a compressor disposed in a bridging fuel conduit extending between the second fuel conduit arrangement and directly to the first fuel storage tank arrangement, wherein the compressor is configured to receive pressurized fuel from the second fuel storage tank arrangement, increase the pressure of the received pressurized fuel, and direct the increased pressurized fuel to the first fuel storage tank arrangement. A technical benefit may include the effective redistribution of fuel between tanks to balance fuel levels and pressures across the system, which can lead to more efficient fuel usage and reduced likelihood of fuel starvation to the power source during high-demand operating situations.

Optionally in some examples, including in at least one preferred example, the first fuel storage tank arrangement may comprise a plurality of fuel storage tank volumes grouped into a first sub-group of fuel tanks and the second fuel storage tank arrangement comprises a plurality of fuel storage tank volumes grouped into a second sub-group of fuel tanks, wherein the controller is configured to select the first sub-group of fuel tanks in response to a higher demanded fuel delivery characteristics level, and select the second sub-group of fuel tanks in response to a lower demanded fuel delivery characteristics level. A technical benefit may include the selective activation of different fuel tank groups based on the required power output from the vehicle, further enhancing fuel efficiency and operational adaptability. Such configuration may also allow for tailored fuel delivery that aligns with the dynamic needs of the power source.

Optionally in some examples, including in at least one preferred example, the demanded fuel delivery characteristics level associated with the fuel-consuming power source may be any one of a demanded fuel injection pressure level for the fuel-consuming power source and a demanded fuel flow rate level for the fuel-consuming power source. A technical benefit may include the precise control over key parameters such as injection pressure and flow rate.

Optionally in some examples, including in at least one preferred example, the fuel is any one of hydrogen gas, methane, and natural gas. Each one of these fuel types may provide distinct properties and benefits, such as lower emissions from hydrogen and widespread availability of natural gas. A technical benefit may include utilizing a fuel having a high energy density, which for hydrogen gas (H2) is approximately 120 MJ/kg and for natural gas (NG) approximately 55 MJ/kg.

Optionally in some examples, including in at least one preferred example, the fuel-consuming power source is any one an internal combustion engine and a fuel cell system. The internal combustion engine may be a spark-ignited internal combustion engine. In other examples, the internal combustion engine may be a compression-ignited internal combustion engine. In addition, or alternatively, the internal combustion engine may be a low-pressure direct injection internal combustion engine system or a high-pressure direct injection internal combustion engine. The internal combustion engine may be a hydrogen internal combustion engine, such as a hydrogen high pressure direct injection internal combustion engine, wherein the fuel storage and supply system is arranged to supply pressurized hydrogen gas to the internal combustion engine. In other examples, the internal combustion engine may be a hybrid system, which can e.g. be a hybrid between low-pressure and high-pressure direct injected, as well as a hybrid between port-fuel or manifold-fuel injected and high-pressure direct injected.

Optionally in some examples, including in at least one preferred example, the fuel supply characteristics level associated with the at least one fuel storage tank volume of the first fuel storage tank arrangement and the fuel supply characteristics level associated with the at least one fuel storage tank volume of the second fuel storage tank arrangement are determined by a set of sensors arranged in the respective fuel storage tank volumes. A technical benefit may include the enhanced monitoring and control of fuel conditions within the tank volumes, facilitated by precise sensor feedback. Such monitoring may also allow for real-time adjustments to the fuel management system, improving the overall efficiency and reliability of the fuel supply to the power source.

Optionally in some examples, including in at least one preferred example, the fuel tanks may be configured to store pressurized gaseous fuel at about 700 to 800 bar. For example, the fuel tanks are arranged to maintain the pressurized gaseous fuel at a maximum pressure of 800 bar. For example, the fuel tanks are arranged to store the pressurized gaseous fuel between 700 bar and 800 bar.

Optionally in some examples, including in at least one preferred example, the fuel tanks may be configured to store pressurized gaseous fuel at about 300 to 350 bar.

Optionally in some examples, including in at least one preferred example, the fuel stored in the fuel tanks is mainly gaseous fuel. For example, at least 70 %, or at least 80 %, or at least 90 %, or at least 95 % (based on volume) of the fuel in the fuel tanks is gaseous. Thus, the fuel tanks are arranged to store the fuel as pressurized gaseous fuel such that at least 70 %, or at least 80 %, or at least 90 %, or at least 95 % (based on volume) of the fuel in the fuel tanks is gaseous.

According to a second aspect of the disclosure, there is provided a vehicle comprising a fuel storage and supply system according of the first aspect of the disclosure. The second aspect of the disclosure may seek to solve the same problem as described for the first aspect of the disclosure. Thus, effects and features of the second aspect of the disclosure are largely analogous to those described above in connection with the first aspect of the disclosure.

Optionally in some examples, including in at least one preferred example, the vehicle further comprises an internal combustion engine in the form of a hydrogen combustion engine or a hydrogen high pressure direct injection engine. The internal combustion engine is configured to receive the pressurized fuel from the fuel conduit arrangement for combustion inside the engine. For example, the fuel storage and supply system may comprise a fuel rail upstream of a fuel injector of the internal combustion engine, wherein the fuel rail is arranged to supply pressurized gaseous fuel to the fuel injector(s) of the internal combustion engine.

Optionally in some examples, including in at least one preferred example, the vehicle further comprises a fuel cell system.

According to a third aspect of the disclosure, there is provided a method for controlling a fuel storage and supply system for a vehicle. The fuel storage and supply system comprises a first fuel storage tank arrangement for storing pressurized fuel, the first fuel storage tank arrangement having at least one fuel storage tank volume for the pressurized fuel; a first fuel conduit arrangement configured to be in fluid communication with the first fuel storage tank arrangement, and further configured to be in fluid communication with a fuel-consuming power source; a second fuel storage tank arrangement for storing pressurized fuel, the second fuel storage tank arrangement having at least one corresponding fuel storage tank volume for the pressurized fuel; a second fuel conduit arrangement configured to be in fluid communication with the second fuel storage tank arrangement, and further configured to be in fluid communication with the fuel-consuming power source; a fuel supply control system, the fuel supply control system comprising a first fuel control valve arrangement disposed in the first fuel conduit arrangement and having a fuel control valve configured to regulate a flow of the pressurized fuel in the first fuel conduit arrangement, and a second control valve arrangement disposed in the second fuel conduit arrangement and having a corresponding fuel control valve configured to regulate a flow of the pressurized fuel in the second fuel conduit arrangement. The method comprises controlling, by processing circuitry of a controller, a flow of fuel through the first fuel conduit arrangement and second fuel conduit arrangement by controlling any one of the fuel control valve and the corresponding fuel control valve in response to a comparison between a fuel supply characteristics level associated with the at least one fuel storage tank volume of the first fuel storage tank arrangement, a fuel supply characteristics level associated with the at least one fuel storage tank volume of the second fuel storage tank arrangement and a demanded fuel delivery characteristics level associated with the fuel-consuming power source.

The third aspect of the disclosure may seek to solve the same problem as described for the first to second aspects of the disclosure. Thus, effects and features of the third aspect of the disclosure are largely analogous to those described above in connection with the first and second aspects of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

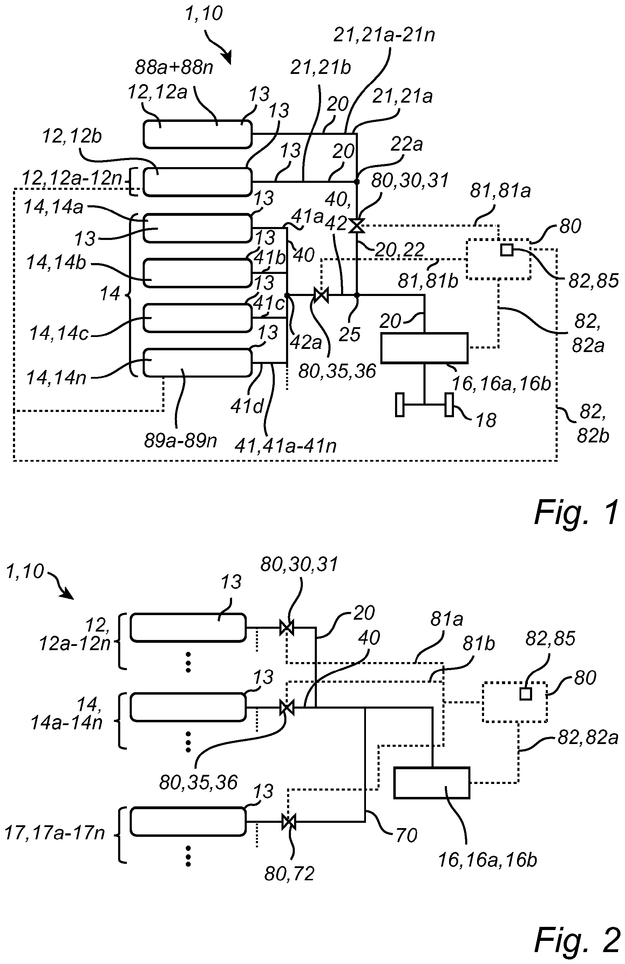

**FIG. 1** schematically illustrates an exemplary vehicle comprising a fuel-consuming power source, such as an internal combustion engine or a fuel cell system, and a fuel storage and supply system arranged to supply fuel to the fuel-consuming power source according to one example.
**FIG. 2** schematically illustrates another exemplary fuel storage and supply system, which is fluidly connected to a fuel-consuming power source, such as an internal combustion engine or a fuel cell system, wherein the fuel storage and supply system is arranged to supply fuel to the fuel-consuming power source according to one example.

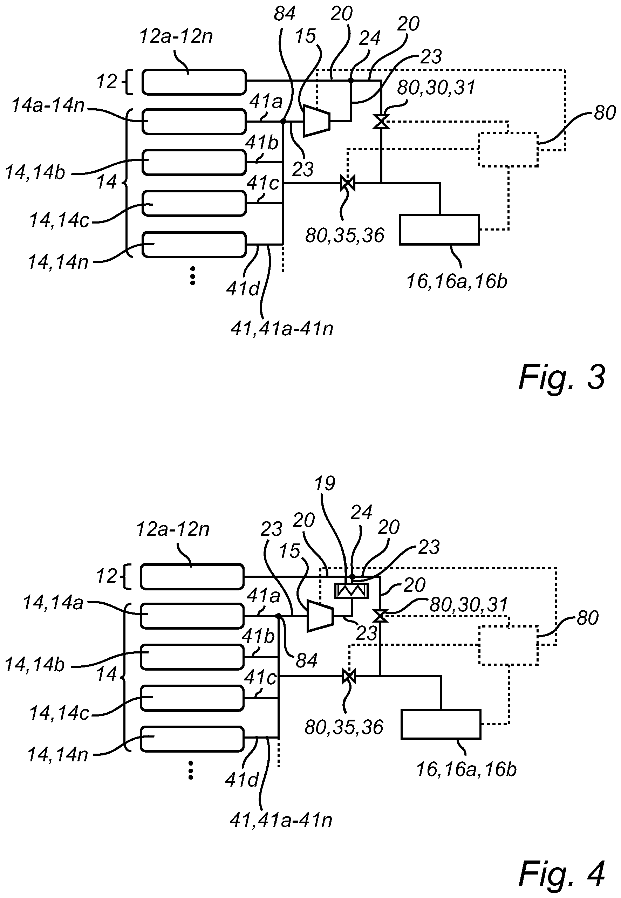

**FIG. 3** schematically illustrates another exemplary fuel storage and supply system, which is fluidly connected to a fuel-consuming power source, such as an internal combustion engine or a fuel cell system, wherein the fuel storage and supply system is arranged to supply fuel to the fuel-consuming power source according to one example.
**FIG. 4** schematically illustrates another exemplary fuel storage and supply system, which is fluidly connected to a fuel-consuming power source, such as an internal combustion engine or a fuel cell system, wherein the fuel storage and supply system is arranged to supply fuel to the fuel-consuming power source according to one example.

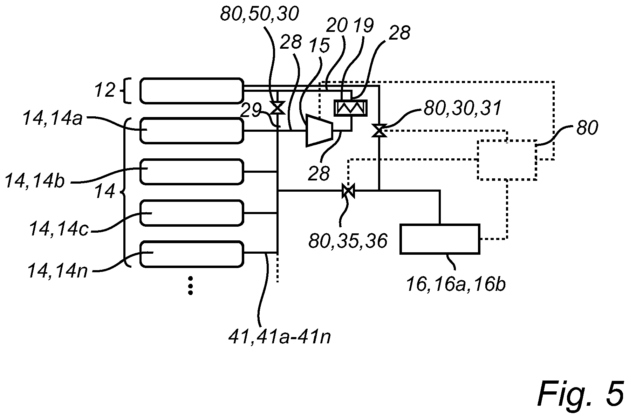

**FIG. 5** schematically illustrates another exemplary fuel storage and supply system, which is fluidly connected to a fuel-consuming power source, such as an internal combustion engine or a fuel cell system, wherein the fuel storage and supply system is arranged to supply fuel to the fuel-consuming power source according to one example.

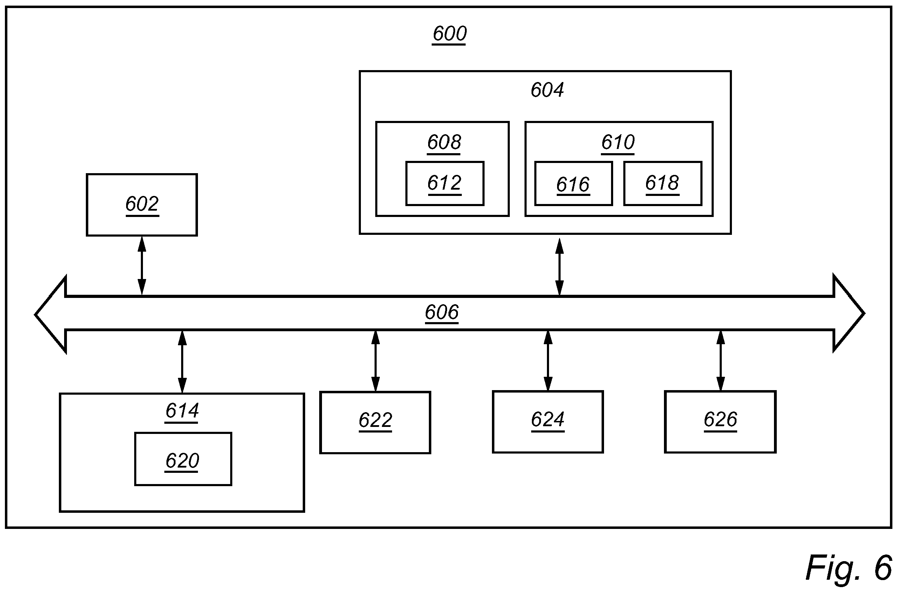

**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

An internal combustion engine (ICE) operating on hydrogen gas, Liquefied Natural Gas (LNG) or Compressed Natural Gas (CNG) are some examples of a power source that may be an attractive alternative to traditional gasoline or diesel-powered engines. Such ICE systems may produce fewer harmful emissions compared to gasoline and diesel.

Another potential attractive alternative to traditional gasoline or diesel-powered engines may be a power source in the form of a fuel cell system.

These types of power sources are in the context of the disclosure denoted as fuel-consuming power sources.

However, despite the progress in the industry, there is still a challenge in delivering fuel, such as hydrogen gas, to these types of fuel-consuming power sources at the correct pressure. Purely by way of example, conventional hydrogen fuel storage systems for heavy-duty vehicles may generally include on-board high-pressure tanks, typically pressurized at about 700 bar. However, fuel injection processes in both fuel cell system and ICE system, e.g. spark-ignited ICE system, may occur at substantially lower pressures ranging from 6 to 20 bar. High-pressure direct-injection (HPDI) ICEs are also generally configured to throttle the hydrogen gas pressure down from about 700 bar to about 300 bar. In other words, the fuel, such as hydrogen, needs to be delivered to the fuel-consuming power source at a suitable pressure level, and in order to provide an appropriate pressure reduction, many of the conventional methods employ throttle valves to reduce hydrogen pressure, bleeding off excess pressure by inducing turbulence and converting it into heat. Despite the effectiveness with such throttle valves, these methods have inherent drawbacks, including energy inefficiencies due to pressure energy dissipation as heat and challenges in achieving precise control over the pressure reduction process. By way of example, it has been observed that most of the internal energy (excluding chemical) contained in the compressed hydrogen gas may be lost when undergoing the throttling process.

For these and other reasons, there is still a need for improving fuel storage and supply systems for fuel-consuming power sources operating on alternative fuels, such as hydrogen gas.

The disclosure may thus seek to enhance energy efficiency within a fuel storage and supply system for a vehicle including at least one fuel-consuming power source in the form of an internal combustion engine and/or a fuel cell system. In particular, the disclosure may seek to provide a fuel storage and supply system that can enhance the operational efficiency of the vehicle by improving fuel economy and reducing emissions. A technical benefit may include the reduction of fuel consumption and emissions by ensuring that the fuel supply is closely matched to the demands of the power source, reducing wastage and inefficiencies. The pressurized fuel is typically pressurized hydrogen fuel. In addition, the proposed fuel storage and supply system may provide for improving the control of the pressure levels of the pressurized fuel during varying operating conditions of the fuel-consuming power source and the vehicle. By adapting to changes in driving conditions and fuel characteristics, the system may further enhance the adaptability of the vehicle to different environments and operational requirements. More specifically, the proposed fuel storage and supply system may at least partly mitigate the problems with undesired delay to reach demanded fuel injection pressures for the internal combustion engine and/or the fuel cell system.

The fuel storage and supply system may be particularly useful for an internal combustion engine including any one of a low-pressure direct injection fuel system, a port fuel injection system, an intake manifold fuel injection, and/or a combination thereof. In such example, the fuel storage and supply system is an integral part of the overall fuel system. Alternatively, or in addition, the fuel storage and supply system is in fluid communication with the low-pressure direct injection fuel system.

The fuel storage and supply system is likewise useful for internal combustion engines in the form of spark-ignited internal combustion engines, such as spark-ignited high pressure direct injection internal combustion engines.

FIG. 1 schematically illustrates a vehicle 1 in the form of an exemplary heavy-duty truck. It should be noted that the vehicle may be any type of vehicle suitable for transporting goods and/or people, such as bulk material from one location to another. For example, the vehicle may be an excavator, loader, articulated hauler, dump truck, truck or any other suitable vehicle known in the art. In some embodiments, the vehicle may be driven by an operator. In other embodiments, the vehicle may be an autonomous vehicle that is controlled by a vehicle motion management (VMM) unit configured to individually control vehicle units and/or vehicle axles and/or wheels of the vehicle. For ease of reference, the following description refers to vehicles in the form of heavy-duty vehicles, such as trucks.

The vehicle 1 illustrated in FIG. 1 comprises a fuel-consuming power source 16. As described herein, the fuel-consuming power source 16 is either an internal combustion engine (ICE) 16a or a fuel cell system 16b.

In an example where the fuel-consuming power source is the ICE 16a, the ICE 16a is configured to provide power for propelling the vehicle 1. The ICE 16a is here a hydrogen ICE. In a hydrogen ICE, the ICE 16a is configured to combust a pressurized gaseous fuel in the form of hydrogen. Such combustion process of hydrogen produces water as by-product in the exhausts. The ICE 16a may e.g. be a pure hydrogen (H2) ICE, such as a hydrogen low-pressure direct injection ICE, a hydrogen high-pressure direct injection ICE, a port fuel injection ICE, and/or an intake manifold fuel injection ICE. In other examples, the ICE 16a is hydrogen-based ICE operating on a mix of hydrogen fuel and another fuel, such as diesel fuel. In other examples, the ICE 16a is natural gas (NG) ICE. In other examples, the ICE 16a is a methane ICE.

As is commonly known in the art, an ICE 16a typically comprises one or more cylinders having corresponding combustion chamber and reciprocating pistons (not illustrated). Such ICE 16a also comprises a fuel injection system having one or more fuel injectors for injecting fuel into the one or more cylinder. Alternatively, or in addition, the fuel injection system is configured to inject fuel into the inlet port(s) of the cylinder(s) (i.e. port fuel injection system). In order to deliver fuel to the fuel injector(s), the ICE 16a also comprises a so-called fuel rail arrangement. The fuel rail arrangement is arranged and configured to receive fuel from one or more fuel tanks. The ICE 16a, i.e. the fuel-consuming power source 16 is configured to be connected to one or more ground engaging members 18, such as one or more wheels of the vehicle 1, as illustrated in FIG. 1.

In this context, a fuel rail arrangement may generally refer to a component in the fuel injection system that delivers pressurized fuel to the fuel injectors. Its primary purpose is to distribute fuel evenly to the injectors, which then spray the fuel into the combustion chambers. The fuel rail is typically mounted on the ICE 16a, and it connects to the fuel injectors through short fuel lines. The fuel rail is arranged and configured to maintain a certain pressure to ensure proper fuel atomization and combustion in the ICE 16a. The pressure can further be regulated by a fuel pressure regulator (not illustrated).

As mentioned above, the fuel-consuming power source 16 may likewise be a fuel cell system 16b. The fuel cell system 16b is of a conventional type and generally comprises one or more fuel cell stacks, each one having a number of fuel cells. By way of example, a number of fuel cells may form the so-called fuel cell stack. The fuel cells may likewise be arranged in multiple fuel cell stacks, each fuel cell stack comprising multiple fuel cells arranged in a stack configuration. Further, each one of the fuel cells making up the fuel cell stack, and thus the fuel cell system 16b, generally comprises an anode side receiving hydrogen as a fuel component and a cathode side receiving compressed air as another fuel component. While there are several different types of fuel cells, distinguished mainly by the type of electrolyte used, a so-called Proton Exchange Membrane (PEM) fuel cell is particularly suitable for use in heavy-duty vehicles, such as the vehicle 1 in FIG. 1. Hence, the fuel cell system 16b is here a PEM fuel cell system. For the purposes of the proposed system and method, as described further herein, the fuel cell system 16b is schematically illustrated and only depicts the anode side, i.e. the cathode side is omitted for simplifying the illustration. Other components such as balance of plant components could also be included in the fuel cell system as are commonly used in the field of fuel cell system.

The fuel cell system 16b may generally be an integral part of an electric propulsion system configured to provide traction power to the vehicle 1. Hence, in the example where the fuel-consuming power source is the fuel cell system 16b, the vehicle 1 is an electric truck, e.g. a fully electrical vehicle. The electrical truck typically comprises the electric propulsion system having an electrical energy storage system, such as a battery system, the fuel cell system 16b and an electrical machine. The electric machine is a traction motor for providing traction power to the vehicle, i.e. for propelling one or more ground engaging members 18 of the vehicle 1, such as a pair of wheels of the vehicle 1. The battery system typically comprises one or more high voltage batteries. The fuel cell system 16b is connected to the electrical machine to provide power to the electrical machine, thereby the electrical machine can provide traction power to the ground engaging members 18, e.g. the wheels. The electric machine may generally include a conventional electric motor. The vehicle 1 may typically include a plurality of electric machines.

In other examples, the vehicle 1 may be a hybrid vehicle, comprising a set of fuel-consuming power sources 16, such as the fuel cell system 16b and the ICE 16a.

The fuel-consuming power source 16 is configured to consume gaseous fuel (e.g. hydrogen) supplied to the fuel-consuming power source 16 by a fuel storage and supply system 10. As such, the power comes from burning fuel in the ICE 16a or from electrochemical reactions in the fuel cell system 16b. To this end, the term "fuel-consuming power source" typically refers to a device or system that uses a fuel as an input to generate power or electricity. For ease of reference, the following description will refer to the fuel cell system 16b as the fuel-consuming power source 16. However, the examples below may likewise be applicable to both the ICE 16a and the fuel cell system 16b unless explicitly stated herein.

As illustrated in FIG. 1, the vehicle 1 further comprises a controller 85 configured to control at least some of the operations of the fuel storage and supply system 10, as described below, such as e.g. the control of the fuel from one or more fuel tanks to the fuel-consuming power source 16.

Turning again to FIG. 1, which illustrates an example of the fuel storage and supply system 10. As depicted in FIG. 1, the fuel storage and supply system 10 comprises a first fuel storage tank arrangement 12 for storing pressurized fuel 13. The first fuel storage tank arrangement 12 comprises at least one fuel storage tank volume, such as a first fuel storage tank volume 12a, for the pressurized fuel 13. In FIG. 1, the first fuel storage tank arrangement 12 comprises a plurality of fuel storage tank volumes 12a to 12n for the pressurized fuel 13. For ease of reference, FIG. 1 illustrates two fuel storage tank volumes 12a, 12b. Each one of the fuel storage tank volumes 12a to 12n, is configured and arranged to store pressurized fuel 13. Each one of the fuel storage tanks 12a to 12n, is also configured and arranged to supply pressurized fuel 13 to the fuel-consuming power source 16 via a first fuel conduit arrangement 20, as illustrated in FIG. 1. Accordingly, the first fuel conduit arrangement 20 is configured to be in fluid communication with the first fuel storage tank arrangement 12, and further configured to be in fluid communication with the fuel-consuming power source 16. More specifically, each one of the fuel storage tanks 12a to 12n, is in fluid communication with the first fuel conduit arrangement 20, and further in fluid communication with the fuel-consuming power source 16.

Each one of the fuel tank volumes 12a to 12n may be provided in the form of a large container. Each one of the fuel tank volumes 12a to 12n may be located at the rear of the vehicle 1, underneath the chassis or body, or at any other location on or in the vehicle 1. Each one of the fuel tank volumes 12a to 12n may often comprise additional components such as fuel level sensors, vents, pressure regulators and filler necks for refueling. These types of components are commonly known in the art, and thus not further described herein.

The fuel 13 is a pressurized fluid medium, in particular a gaseous medium, such as hydrogen gas. However, a liquid fluid medium may also be considered. In examples where the fuel is a liquid fuel, it could potentially be a cryogenic liquified gas. The evaporation of a fuel in liquid form to gaseous form belongs to common general knowledge and is thus not further described herein. In the following examples, as e.g. illustrated in FIG. 1, the fuel 13 is hydrogen gas. In other examples (not illustrated), the fuel 13 is a natural gas. The fuel 13 may also be methane, such as pure methane, e.g. bio methane or synthetic methane. The hydrogen gas, i.e. the fuel 13, is thus an integral part of the fuel storage and supply system 10.

Accordingly, as illustrated in FIG. 1, the fuel storage and supply system 10 comprises the first fuel conduit arrangement 20. The first fuel conduit arrangement 20 is configured to be in fluid communication with the number of fuel tank volumes 12a to 12n of the first fuel storage tank arrangement. The first fuel conduit arrangement 20 is here also configured to contain and transport fuel 13 from the fuel storage tank volumes 12a to 12n to the fuel-consuming power source 16.

More specifically, as illustrated in FIG. 1, the first fuel conduit arrangement 20 is configured to be in fluid communication with each one of the fuel tank volumes 12a to 12n by individual fuel sub-conduits. Hence, by way of example, the first fuel conduit arrangement 20 comprises a first branch of fuel conduits 21, 21a to 21n.

The first branch of fuel conduits 21, 21a to 21n comprises a plurality of fuel conduits, e.g. two fuel conduits, as depicted in FIG. 1. The number of fuel conduits generally varies in view of the number of fuel tank volumes 12a to 12n. As such, each one of the fuel tank volumes 12a to 12n is fluidly connected to the fuel conduit arrangement 20 by a corresponding fuel conduit 21, 21a to 21n. For example, as illustrated in FIG. 1, a first fuel conduit 21a of the first branch of fuel conduits 21 is fluidly connected to a first fuel tank volume 12a of the first fuel storage tank arrangement and a second fuel conduit 21b of the first branch of fuel conduits 21 is fluidly connected to a second fuel tank volume 12b of the first fuel storage tank arrangement. As may be gleaned from FIG. 1, the fuel tank volumes 12a to 12b are thus arranged in a parallel configuration. Accordingly, it should also be noted that the fuel tank volumes 12a to 12n, are here arranged in a parallel fuel tank configuration. In this context, a parallel configuration is different to a series configuration of fuel tank volumes.

Further, as depicted in FIG. 1, each one of the fuel tank volumes 12a to 12n, is in fluid communication with a main fluid conduit 22 of the first fuel conduit arrangement 20. The first branch of fuel conduits 21, 21a to 21n are here arranged to converge to a common junction point 22a at the main fluid conduit 22, as indicated in FIG. 1. Accordingly, the first branch of fuel conduits 21, 21a to 21n are fluidly connected to the main fluid conduit 22. The main fluid conduit 22 of the first fuel conduit arrangement 20 is here arranged in fluid communication with the fuel-consuming power source 16.

Moreover, as depicted in FIG. 1, the fuel storage and supply system 10 comprises a fuel supply control system 80. The fuel supply control system 80 comprises the controller 85. The controller 85 is configured to regulate flow of fuel through the fuel storage and supply system 10 by a first fuel control valve arrangement 30.

Thus, the fuel supply control system 80 comprises the first fuel control valve arrangement 30, as shown in FIG. 1. The first fuel control valve arrangement 30 is disposed in the first fuel conduit arrangement 20. In this example, the first fuel control valve arrangement 30 is disposed in the main conduit 22 of the first fuel conduit arrangement 20. The first fuel control valve arrangement 30 comprises a fuel control valve 31. The fuel control valve 31 is configured to regulate a flow of the pressurized fuel 13 in the first fuel conduit arrangement 20. The first fuel control valve arrangement 30 is configured to be in communication with the controller 85, as shown in FIG. 1. The fuel control valve 31 is disposed in the first fuel conduit arrangement 20.

The first fuel control valve 31 can be provided in several different manners. In one example, the first fuel control valve 31 is a pressure regulator valve. In another example, the first fuel control valve 31 is flow block valve. In another example, the first fuel control valve 31 is a flow control valve. Accordingly, the first fuel control valve 31 is provided in the form or a pressure regulator valve, a flow block valve or a flow control valve.

As used herein, a pressure regulator valve is configured to maintain a specific pressure level in a fluid conduit, such as the main fluid conduit. The pressure regulator valve is used to control and limit the pressure of the fuel. The pressure regulator valve controls pressure by adjusting the resistance to the flow, thus influencing the pressure downstream the pressure regulator valve.

As used herein, a flow block valve is configured to regulate flow of fuel through blocking or stopping the flow of fuel through a fluid conduit. Examples of flow block valves can be shut-off valves or isolation valves used to control the passage of fluid, preventing or allowing flow as needed.

As used herein, a flow control valve is configured to regulate a rate or speed of fuel flow through the flow control valve. As such, a flow control valve is designed to control the volume of fluid passing through it. The flow control valve typically controls flow by adjusting the size of the valve opening or by throttling the flow.

The choice between the valves may generally depend on the specific requirements of the application and the desired control parameters for the fuel being used.

It should thus be appreciated that the term "regulating a flow of pressurized fuel" may refer to a regulation of a fuel flow rate, a regulation of a fuel pressure, and/or a combination of a regulation of fuel flow rate and fuel pressure. The term can thus be interpreted to cover different scenarios, including regulating only the flow rate, only the pressure, or both flow rate and pressure. The flow rate may refer to a regulation of the volumetric flow rate and/or a regulation of the mass flow rate.

In similar vein, the fuel storage and supply system 10 comprises a second fuel storage tank arrangement 14 for storing pressurized fuel 13. The second fuel storage tank arrangement 14 comprises at least one corresponding fuel storage tank volume, such as a corresponding first fuel storage tank volume 14a, for the pressurized fuel 13. In FIG. 1, the second fuel storage tank arrangement 14 comprises a plurality of fuel storage tank volumes 14a to 14n for the pressurized fuel 13. For ease of reference, FIG. 1 illustrates four fuel storage tank volumes 14a to 14d. Each one of the fuel storage tank volumes 14a to 14n, is configured and arranged to store pressurized fuel 13. Each one of the fuel storage tanks 14a to 14n, is also configured and arranged to supply pressurized fuel 13 to the fuel-consuming power source 16 via a second fuel conduit arrangement 40, as illustrated in FIG. 1. Accordingly, the second fuel conduit arrangement 40 is configured to be in fluid communication with the second fuel storage tank arrangement 14, and further configured to be in fluid communication with the fuel-consuming power source 16. More specifically, each one of the fuel storage tanks 14a to 14n is in fluid communication with the second fuel conduit arrangement 40, and further in fluid communication with the fuel-consuming power source 16.

In FIG. 1, the second fuel conduit arrangement 40 is fluidly connected to the fuel-consuming power source 16 through the first fuel conduit arrangement 20. As such, the second fuel conduit arrangement 40 is arranged to converge to a common junction point 25 at the first fuel conduit arrangement 20. For example, the corresponding main fluid conduit 42 is arranged to converge to the common junction point 25 at the main fluid conduit 22, as shown in FIG. 1. Accordingly, the corresponding main fluid conduit 42 is fluidly connected to the main fluid conduit 22. The corresponding main fluid conduit 42 of the second fuel conduit arrangement 40 is thus arranged in fluid communication with the fuel-consuming power source 16. In other examples, the second fuel conduit arrangement 40 is directly fluidly connected to the fuel-consuming power source 16. In other examples, the first fuel conduit arrangement 20 is fluidly connected to the fuel-consuming power source 16 through the second fuel conduit arrangement 40. In other examples, the first fuel conduit arrangement 20 and the second fuel conduit arrangement 40 converge into a common conduit, which is fluidly connected to the fuel-consuming power source 16.

Each one of the fuel tank volumes 14a to 14n may be provided in the form of a large container. Each one of the fuel tank volumes 14a to 14n may be located at the rear of the vehicle 1, underneath the chassis or body, or at any other location on or in the vehicle. Each one of the fuel tank volumes 14a to 14n may often comprise additional components such as fuel level sensors, vents, pressure regulators and filler necks for refueling. These types of components are commonly known in the art, and thus not further described herein.

Accordingly, as illustrated in FIG. 1, the fuel storage and supply system 10 comprises the second fuel conduit arrangement 40. The second fuel conduit arrangement 40 is configured to be in fluid communication with the number of fuel tank volumes 14a to 14n. The second fuel conduit arrangement 40 is here also configured to contain and transport fuel 13 from the fuel storage tank volumes 14a to 14n to the fuel-consuming power source 16. More specifically, as illustrated in FIG. 1, the second fuel conduit arrangement 40 is configured to be in fluid communication with each one of the fuel tank volumes 14a to 14n by individual fuel sub-conduits. Hence, by way of example, the second fuel conduit arrangement 40 comprises a second branch of fuel conduits 41, 41a to 41n.

The second branch of fuel conduits 41, 41a to 41n comprises a plurality of fuel conduits, e.g. four fuel conduits, as depicted in FIG. 1. The number of fuel conduits generally varies in view of the number of fuel tank volumes 14. As such, each one of the fuel tank volumes 14a to 14n is fluidly connected to the second fuel conduit arrangement 40 by a corresponding fuel conduit 41, 41a to 41n. For example, as illustrated in FIG. 1, a first fuel conduit 41a of the second branch of fuel conduits 41 is fluidly connected to a first fuel tank volume 14a of the second fuel storage tank arrangement 14, a second fuel conduit 41b of the second branch of fuel conduits 41 is fluidly connected to a second fuel tank volume 14b, a third fuel conduit 41c of the second branch of fuel conduits 41 is fluidly connected to a third fuel tank volume 14c, and a fourth fuel conduit 41d of the second branch of fuel conduits 41 is fluidly connected to a fourth fuel tank volume 14d. As may be gleaned from FIG. 1, the fuel tank volumes 14a to 14d are thus arranged in a parallel configuration. Accordingly, it should also be noted that the fuel tank volumes 14a to 14n are here arranged in a parallel fuel tank configuration. In this context, a parallel configuration is different to a series configuration of fuel tank volumes.

Further, as depicted in FIG. 1, each one of the fuel tank volumes 14a to 14n, is in fluid communication with a corresponding main fluid conduit 42 of the second fuel conduit arrangement 40. The second branch of fuel conduits 41, 41a to 41n are here arranged to converge to a common junction point 42a at the corresponding main fluid conduit 42, as indicated in FIG. 1. Accordingly, the second branch of fuel conduits 41a to 41n are fluidly connected to the corresponding main fluid conduit 42. The corresponding main fluid conduit 42 of the second fuel conduit arrangement 40 is here arranged in fluid communication with the fuel-consuming power source 16.

Moreover, as depicted in FIG. 1, the fuel supply control system 80 comprises a second fuel control valve arrangement 35, as shown in FIG. 1. The second fuel control valve arrangement 35 is disposed in the second fuel conduit arrangement 40. In this example, the second fuel control valve arrangement 35 is disposed in the corresponding main conduit 42 of the second fuel conduit arrangement 40. The second fuel control valve arrangement 35 comprises a corresponding fuel control valve 36. The fuel control valve 36 is configured to regulate a flow of the pressurized fuel 13 in the second fuel conduit arrangement 40. The second fuel control valve arrangement 35 is configured to be in communication with the controller 85, as shown in FIG. 1. The corresponding fuel control valve 36 is disposed in the second fuel conduit arrangement 40.

The second fuel control valve 36 can also be provided in several different manners. In one example, the second fuel control valve 36 is a valve pressure regulator. In another example, the second fuel control valve 36 is flow block valve. In another example, the second fuel control valve 36 is a flow control valve. Accordingly, the second fuel control valve 36 is provided in the form or a pressure regulator valve, a flow block valve or a flow control valve. The choice between the valves may generally depend on the specific requirements of the application and the desired control parameters for the fuel being used.

The controller 85 is also configured to regulate flow of fuel through the fuel storage and supply system 10 by the second fuel control valve arrangement 35.

More specifically, the controller 85 comprises processing circuitry 82 configured to control flow of fuel 13 through the first fuel conduit arrangement 20 and the second fuel conduit arrangement 40 by controlling any one of the fuel control valve 31 and the corresponding fuel control valve 36, respectively. In particular, the processing circuitry 82 is configured to control flow of fuel 13 through the first fuel conduit arrangement 20 and the second fuel conduit arrangement 40 by controlling any one of the fuel control valve 31 and the corresponding fuel control valve 36, respectively, in response to a comparison between a fuel supply characteristics level associated with the fuel storage tank volumes 12a to 12n of the first fuel storage tank arrangement 12, a fuel supply characteristics level associated with the fuel storage tank volumes 14a to 14n of the second fuel storage tank arrangement 14, and a demanded fuel delivery characteristics level 82a associated with the fuel-consuming power source 16.

This means that the fuel storage and supply system 10 can be controlled in a more precise manner depending on available pressure of the fuel in the first and second fuel storage tank arrangements 12, 14 and the demanded fuel pressure from the fuel-consuming power source 16. More specifically, the supply of fuel 13, such as hydrogen gas, from the first and second fuel storage tank arrangements 12, 14 to the fuel-consuming power source 16 is controlled by controlling any one of the first and second fuel control valves 31, 36 in response to the comparison between the fuel supply characteristics level associated with the fuel storage tank volumes 12a to 12n of the first fuel storage tank arrangement 12, the fuel supply characteristics level associated with the fuel storage tank volumes 14a to 14n of the second fuel storage tank arrangement 14, and the demanded fuel delivery characteristics level associated with the fuel-consuming power source 16.

As such, the fuel storage and supply system 10 allows for regulating supply of fuel 13 from the first and second fuel storage tank arrangements 12, 14 to the fuel-consuming power source 16 in a precise and efficient manner.

In the context of the present disclosure, the term "fuel supply characteristics level associated with the number of fuel storage tank volumes" may refer to an average fuel pressure of the fuel storage tank volumes of the number of fuel storage tank volumes and/or to an individual fuel pressure of each one of the fuel storage tank volumes of the number of fuel storage tank volumes. The fuel supply characteristics level associated with the number of fuel storage tank volumes is generally a measured level. By way of example, the fuel supply characteristics levels associated with the fuel storage tank volumes 12a to 12n of the first fuel storage tank arrangement 12 are determined by a corresponding sensor 88a to 88n arranged in the respective fuel storage tank volumes 12a to 12n, as illustrated in FIG. 1. Analogously, the fuel supply characteristics levels associated with the fuel storage tank volumes 14a to 14n of the second fuel storage tank arrangement 14 are determined by a corresponding sensor 89a to 89n arranged in the respective fuel storage tank volumes 14a to 14n, as illustrated in FIG. 1.

The fuel supply characteristics level associated with the number of fuel storage tanks can be measured by a sensor in the form of a pressure sensor 88a to 88n, 89a to 89n arranged in each one of the fuel tanks 12a to 12n, 14a to 14n. Data 82b containing the measured pressure levels are transferred to the controller 85 for use as input control data for controlling the fuel storage and supply system 10. The data 82b can also be stored in a memory of the controller 85.

Accordingly, in one example, the controller 85 is configured to compare an average fuel pressure of the fuel storage tank volumes of the number of fuel storage tank volumes 12, 12a to 12n with a demanded fuel delivery characteristics level associated with the fuel-consuming power source 16. Analogously, the controller 85 is configured to compare an average fuel pressure of the fuel storage tank volumes of the number of fuel storage tank volumes 14, 14a to 14n with a demanded fuel delivery characteristics level associated with the fuel-consuming power source 16.

It should also be noted that in some examples, the fuel supply characteristics level may be determined without using pressure measurements. For example, the controller 85 may be configured to determine the fuel supply characteristics level based on a predetermined fuel pressure model of the fuel supply characteristics levels. Such model can be configured from fuel flow demand historical data stored in the processing circuitry, or in a memory of the controller 85. As such, the fuel supply characteristics level may optionally be estimated from fuel flow demand history data.

As mentioned herein, the demanded fuel delivery characteristics level 82a associated with the fuel-consuming power source 16 may be a demanded fuel rail injection pressure of the ICE 16a. Hence, in one example, the controller 85 is configured to compare an average fuel pressure of the fuel storage tank volumes of the number of fuel storage tank volumes 12a to 12n, 14a to 14n with the demanded fuel rail injection pressure of the ICE 16a.

In another example, the controller 85 is configured to compare an individual fuel pressure of each one of the fuel storage tank volumes of the number of fuel storage tank volumes 12, 12a to 12n with a demanded fuel delivery characteristics level associated with the fuel-consuming power source 16. Analogously, the controller 85 is configured to compare an individual fuel pressure of each one of the fuel storage tank volumes of the number of fuel storage tank volumes 14a to 14n with a demanded fuel delivery characteristics level associated with the fuel-consuming power source 16.

As mentioned herein, the demanded fuel delivery characteristics level 82a associated with the fuel-consuming power source 16 may be the demanded fuel rail injection pressure of the ICE 16a. Hence, in one example, the controller 85 is configured to compare an individual fuel pressure of each one of the fuel storage tank volumes of the number of fuel storage tank volumes 12a to 12n, 14a to 14n with the demanded fuel rail injection pressure of the ICE 16a.

In other examples, the demanded fuel delivery characteristics level 82a associated with the fuel-consuming power source 16 may be a demanded fuel flow rate for the fuel-consuming power source 16, such as a demanded fuel flow rate for the fuel cell system 16b and/or a demanded fuel flow rate for the ICE 16a.

The fuel flow rate may either be a fuel volumetric flow rate or a fuel mass flow rate.

Based on the desired, or needed pressure rate, the controller 85 is configured to control one or more of the fuel control valves 31, 36 based on the above comparison. The fuel control valves 31, 36 are generally configured to adjust their opening or closing based on signals 81, 81a, 81b from the controller 85, e.g. control signals from the processing circuitry 82. The control output signals are indicated with reference numerals 81, 81a, 81b in FIG. 1.

By way of example, the demanded fuel delivery characteristics level 82a associated with a fuel-consuming power source 16 is any one of a demanded fuel injection pressure for the fuel-consuming power source 16 and a demanded fuel flow rate for of the fuel-consuming power source. The demanded fuel injection pressure for the fuel-consuming power source 16 and the demanded fuel flow rate for of the fuel-consuming power source 16 can be determined by the processing circuitry 82. By way of example, the demanded fuel injection pressure for the fuel-consuming power source and the demanded fuel flow rate for of the fuel-consuming power source can be derivable from data sheets, look-up tables or the like. In addition, or alternatively, the demanded fuel injection pressure for the fuel-consuming power source 16 and the demanded fuel flow rate for of the fuel-consuming power source 16 can be determined by the processing circuitry 82 by means of receiving operational data from the engine 16a and/or the fuel cell system 16b. The processing circuitry 82 may also be configured to receive data from one or more pressure sensors and/or flow rate sensors.

By way of example, the ICE 16a would generally have an associated pressure map of injection pressures, which is a function of different operating parameters. In this manner, the controller 85 is configured to determine, based on the pressure map, the desired or needed level of fuel injection pressure.

In regard to the current fuel pressure of each one of the fuel storage tank volumes of the number of fuel storage tank volumes 12, 12a to 12n, such measurement and/or data is generally received at the processing circuitry 82 from one or more sensors arranged in the fuel tank volumes. Such data may likewise be stored in a memory of the controller 85, and updated during operation of the fuel storage and supply system 10. In regard to the current fuel pressure of each one of the fuel storage tank volumes of the number of fuel storage tank volumes 14, 14a to 14n, such measurement and/or data is generally received at the processing circuitry 82 from one or more sensors arranged in the fuel tank volumes. Such data may likewise be stored in a memory of the controller 85, and updated during operation of the fuel storage and supply system 10.

The controller 85 can be provided in the form of a computer system. One example of a controller in the form of a computer system is further described in relation to FIG: 6.

In one example, the demanded fuel delivery characteristics level 82a associated with the fuel-consuming power source 16 is determined in response to an upcoming vehicle operation. The upcoming vehicle operation can be determined from acquired topology data of an intended route for vehicle 1. Moreover, the demanded fuel delivery characteristics level associated with the fuel-consuming power source 16 is here determined based on transport mission data. The transport mission data typically contains data about the gross combined weight (GCW) of the vehicle 1 and topology data of an intended route for the transport mission.

In one example, the demanded fuel delivery characteristics level 82a associated with the fuel-consuming power source 16 is predicted from energy management data. Such energy management data comprise road topology data, GCW, traffic data, data indicative of weather conditions, data indicative of fuel-station infrastructure and availability of fuel-station infrastructure. Such data can be supplied to the controller 85 for use in predicting energy consumption and determining energy management. In addition, such data may be used in combination with data from pressure sensor(s) to predict fuel consumption demand and make control decisions to minimize, or at least reduce the compressor work and power penalty, and maximize, or at least increase the available range.

In one example, the processing circuitry 82 of the controller 85 is configured to receive real-time data on pressure changes in the fuel storage tank volumes 12, 12a to 12n of the first fuel storage tank arrangement 12 and real-time data on pressure changes in the fuel storage tank volumes 14, 14a to 14n of the second fuel storage tank arrangement 14. Moreover, in this example, the processing circuitry 82 of the controller 85 is configured to adapt the control of the fuel control valve 31 and the corresponding fuel control valve 36 in response to the received real-time data indicative of the pressure changes. The pressure changes in the first fuel storage tank arrangement 12 and the second fuel storage tank arrangement 14 are determined by the pressure sensors 88a to 88n, 89a to 89n arranged in the respective fuel storage tank volumes of the first fuel storage tank arrangement 12 and the second fuel storage tank arrangement 14. As mentioned herein, data 82b containing the measured pressure levels and pressure changes are transferred to the controller 85 for use as input control data for controlling the fuel storage and supply system 10. The data 82b can also be stored in a memory of the controller 85.

Moreover, in FIG. 1, it should be noted that the number of fuel tanks can be grouped into a first sub-group of fuel tanks 12a to 12n and a second sub-group of fuel tanks 14a to 14n. By way of example, the first fuel storage tank arrangement 12 comprises the plurality of fuel storage tank volumes 12a to 12n grouped into a first sub-group of fuel tanks and the second fuel storage tank arrangement 14 comprises the plurality of fuel storage tank volumes 14a to 14n grouped into a second sub-group of fuel tanks. Further, in such arrangement of the fuel tank volumes, the controller 85 is configured to select the first sub-group of the fuel tanks in response to a higher demanded fuel delivery characteristics level, and select the second sub-group of fuel tanks in response to a lower demanded fuel delivery characteristics level.

It should be noted that each one of the conduits 21, 22, 41, 42 making up the fuel conduit arrangements 20, 40 can be provided in the form of a pipe, a line, a hose or the like, which are standard components of a fuel supply system of a vehicle.

FIG. 2 schematically illustrates another example of the fuel storage and supply system 10. The fuel storage and supply system 10 of FIG. 2 comprises the same components as the fuel storage and supply system 10 of FIG. 1. In addition, in the example of FIG. 2, the fuel storage and supply system 10 comprises a third fuel storage tank arrangement 17 for storing pressurized fuel 13, the third fuel storage tank arrangement 17 having at least one corresponding fuel storage tank volume 17a to 17n for the pressurized fuel 13. Moreover, the fuel storage and supply system 10 comprises a third fuel conduit arrangement 70 configured to be in fluid communication with the third fuel storage tank arrangement 17, and further configured to be in fluid communication with the fuel-consuming power source 16. Moreover, as depicted in FIG. 2, the fuel supply control system 80 comprises a third fuel control valve arrangement 72, as shown in FIG. 2. The third fuel control valve arrangement 72 is disposed in the third fuel conduit arrangement 70. In this example, the third fuel control valve arrangement 72 is disposed in a corresponding main conduit of the third fuel conduit arrangement 70. The third fuel control valve arrangement 72 comprises a corresponding fuel control valve configured to be in communication with the controller 85, and configured to regulate a flow of the pressurized fuel 13 in the third fuel conduit arrangement 70. In other words, the fuel storage and supply system 10 may comprise a plurality of fuel storage tank arrangements for storing pressurized fuel 13, a plurality of fuel storage tank volumes, a plurality of fuel conduit arrangements having a plurality of fuel control valve arrangements.

FIG. 3 schematically illustrates another example of the fuel storage and supply system 10. The fuel storage and supply system 10 of FIG. 3 comprises the same components as the fuel storage and supply system 10 of FIG. 1 and/or FIG. 2. In addition, in this example of FIG. 3, the fuel storage and supply system 10 comprises a compressor 15. The compressor 15 is disposed in a bridging fuel conduit 23. The bridging fuel conduit 23 extends between the first fuel conduit arrangement 20 and the second fuel conduit arrangement 40. Accordingly, the fuel storage and supply system 10 comprises the bridging fuel conduit 23. Moreover, in FIG. 3, the bridging fuel conduit 23 is arranged to provide fluid communication between the first fuel conduit arrangement 20 and the second fuel conduit arrangement 40 at a position 24 upstream the fuel control valve 31 and at a position 84 upstream the corresponding fuel control valves 36. Moreover, in this example, the controller 85 is configured to control the compressor 15 in response to a fuel pressure of the fuel 13 in at least one fuel storage tank volume 12a of the first fuel storage tank arrangement 12 and a fuel pressure of the fuel 13 in at least one fuel storage tank volume 14a of the second fuel storage tank arrangement 14. By way of example, the controller 85 is configured to determine pressure levels of the fuel 13 in the fuel storage tank volumes 12a to 12n and pressure levels of the fuel in the fuel storage tank volumes 14a to 14n, and, based on the determined pressure levels, determine which one of fuel storage tank volumes that amount to low pressure tank volumes. In response to the determination, the controller 85 is configured to control the compressor 15 so as to increase the pressure of the received fuel 13 from the low-pressure fuel storage tank volumes, such as the tank volumes of the second fuel storage tank arrangement 14, and further direct the increased pressure fuel to the first fuel conduit arrangement 20. The compressor 15 is here a piston compressor. A piston compressor is a conventional component in a vehicle, and not further described herein. The compressor 15 may optionally comprise an intercooler (although not shown).

The controller 85 can control the fuel storage and supply system 10 in several different manners. Purely by way of example, the controller 85 is configured to control the fuel storage and supply system 10 so as to perform an initial depletion of the fuel storage tank arrangement 12. In such control operation, the first fuel storage tank arrangement 12, which comprises fuel storage tank volumes 12a to 12n, will be utilized initially to reduce its internal pressure expediently to align with an operating outlet pressure of the compressor 15, typically around 350 bar. During this phase, the pressure within the first fuel storage tank arrangement 12 is monitored by the controller 85, e.g. by the sensors embedded within each tank volume to track real-time pressure data. Once the pressure in the first fuel storage tank arrangement 12 reaches approximately 350 bar, the first fuel storage tank arrangement 12 transitions into an accumulator mode. In such accumulator mode, the compressor 15 is engaged whenever the demanded fuel pressure by the fuel-consuming power source 16 exceeds the current pressure in the second fuel storage tank arrangement 14. The compressor 15 continues to operate until the pressure within the first fuel storage tank arrangement 12 is restored to its maximum capacity, approximately 350 bar, effectively balancing the pressure demands of the system.

In another example, the controller 85 is configured to control the fuel storage and supply system 10 so as to perform utilization of the second fuel storage tank arrangement 14. In such control operation, the second fuel storage tank arrangement 14, encompassing fuel storage tank volumes 14a to 14n, is predominantly used under normal operating conditions, leading to a lower average pressure within the second fuel storage tank arrangement 14 compared to the first fuel storage tank arrangement 12. The second fuel storage tank arrangement 14 serves as the primary fuel source, with the controller 85 adjusting usage based on the dynamic pressure needs of the fuel-consuming power source 16. Whenever the pressure within the second fuel storage tank arrangement 14 drops below the demanded pressure level by the fuel-consuming power source 16, and concurrently, the pressure in the first fuel storage tank arrangement 12 falls beneath the maximum outlet pressure of the compressor 15 (-350 bar), the compressor 15 is activated.

The compressor 15 then operates to elevate the lower-pressure fuel from the second fuel storage tank arrangement 14, transferring and compressing it into the first fuel storage tank arrangement 12. This operation continues until the pressure in the first arrangement reaches or exceeds the compressor's designated maximum output pressure, thereby ensuring a continuous and efficient supply of fuel to meet operational demands.

FIG. 4 schematically illustrates another example of the fuel storage and supply system 10. In this example, the fuel storage and supply system 10 comprises the same components as the fuel storage and supply system 10 of FIG. 3. In addition, the fuel storage and supply system 10 here comprises a heat exchanger 19. The heat exchanger 19 is disposed in the bridging fuel conduit 23. The heat exchanger 19 is configured to regulate a temperature of the pressurized fuel 13 from the compressor 15. The heat exchanger 19 is arranged downstream the compressor 15. The example in FIG. 4 can be operated by the controller 85 in a similar manner as described for the example in FIG. 3 with the only difference that the example in FIG. 4 comprises the heat exchanger 19, which is arranged downstream the compressor 15.

FIG. 5 schematically illustrates another example of the fuel storage and supply system 10. The fuel storage and supply system 10 of FIG. 5 comprises the same components as the fuel storage and supply system 10 of FIGS. 1 to 3. One difference between the example in FIG. 5 and the example in FIG. 3 is that the fuel storage and supply system 10 comprises a first bridging fuel conduit 28 and a second bridging fuel conduit 29. As illustrated in FIG. 5, the compressor 15 is disposed in the first bridging fuel conduit 28 extending between the second fuel conduit arrangement 40 and the first fuel storage tank arrangement 12. More specifically, the bridging fuel conduit 28 here extends from the second fuel conduit arrangement 40 and directly to the first fuel storage tank arrangement 12. Moreover, the compressor 15 is configured to receive pressurized fuel 13 from the second fuel storage tank arrangement 14, increase the pressure of the received pressurized fuel 13, and direct the increased pressurized fuel 13 to the first fuel storage tank arrangement 12.

Further, in FIG. 5, the compressor outlet is directly connected to the first fuel storage tank arrangement 12, i.e. connected to the multiple tank volumes 12a to 12n. Such arrangement provides that all pressurized fuel is directed into the first fuel storage tank arrangement 12 before the pressurized fuel is directed to the fuel-consuming power source 16. Functionally, the first fuel storage tank arrangement 12 here also serves as a buffer storage volume. A buffer storage volume may be useful for absorbing and mitigating pressure fluctuations that typically arise from the operation of the compressor 15. By smoothing out such fluctuations, the first fuel storage tank arrangement 12 configured as a buffer storage volume provides a more stable fuel supply to the fuel-consuming power source 16, enhancing operational efficiency and reducing the risk of pressure-related disruptions.

Moreover, the fuel storage and supply system 10 comprises the second bridging fuel conduit 29 extending between the second fuel conduit arrangement 40 and the first fuel storage tank arrangement 12. The second bridging fuel conduit 29 comprises a corresponding fuel control valve arrangement 50. The corresponding fuel control valve arrangement 50 is here an integral part of the fuel supply control system 80. The corresponding fuel control valve arrangement 50 is disposed in the second bridging fuel conduit 29. The corresponding fuel control valve arrangement 50 comprises a corresponding fuel control valve, which is configured to be in communication with the controller 85, and further configured to regulate a flow of the pressurized fuel 13 in the second bridging fuel conduit 29. The corresponding fuel control valve arrangement 50 is arranged to equilibrate pressure between the two fuel storage tank arrangements 12, 14. Such arrangement may be particularly useful during certain operational situations such as safety procedures and refueling. It should be noted that a similar valve arrangement could be integrated in any one of the other examples of FIGS. 1 to 4.

It should be noted that the above presentation of the fuel storage and supply system 10 should also be regarded as disclosing a method for controlling the fuel storage and supply system 10, for instance using the controller 85 and the processing circuitry 82. The method comprises at least a step / operation / action of controlling, by the processing circuitry 82 of the controller 85, a flow of fuel 13 through the first fuel conduit arrangement 20 and the second fuel conduit arrangement 40 by controlling any one of the fuel control valve 31 and the corresponding fuel control valve 36 in response to the comparison between the fuel supply characteristics level associated with the at least one fuel storage tank volume of the first fuel storage tank arrangement 12, the fuel supply characteristics level associated with the at least one fuel storage tank volume of the second fuel storage tank arrangement 14 and the demanded fuel delivery characteristics level associated with the fuel-consuming power source 16.

Further details of one example of a computer system that can be used as the controller 85 will now be described in relation to FIG. 6.

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device
interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Moreover, the present disclosure may be exemplified by any one of the below examples.

Example 1. A fuel storage and supply system for a vehicle, the fuel storage and supply system comprising: a first fuel storage tank arrangement for storing pressurized fuel, the first fuel storage tank arrangement having at least one fuel storage tank volume for the pressurized fuel; a first fuel conduit arrangement configured to be in fluid communication with the first fuel storage tank arrangement, and further configured to be in fluid communication with a fuel-consuming power source; a second fuel storage tank arrangement for storing pressurized fuel, the second fuel storage tank arrangement having at least one corresponding fuel storage tank volume for the pressurized fuel; a second fuel conduit arrangement configured to be in fluid communication with the second fuel storage tank arrangement, and further configured to be in fluid communication with the fuel-consuming power source; a fuel supply control system, the fuel supply control system comprising a first fuel control valve arrangement disposed in the first fuel conduit arrangement and having a fuel control valve configured to regulate a flow of the pressurized fuel in the first fuel conduit arrangement, and a second fuel control valve arrangement disposed in the second fuel conduit arrangement and having a corresponding fuel control valve configured to regulate a flow of the pressurized fuel in the second fuel conduit arrangement; and wherein the fuel supply control system further comprises a controller having processing circuitry configured to control flow of fuel through the first fuel conduit arrangement and second fuel conduit arrangement by controlling any one of the fuel control valve and the corresponding fuel control valve in response to a comparison between a fuel supply characteristics level associated with the at least one fuel storage tank volume of the first fuel storage tank arrangement, a fuel supply characteristics level associated with the at least one fuel storage tank volume of the second fuel storage tank arrangement and a demanded fuel delivery characteristics level associated with the fuel-consuming power source.

Example 2. The fuel storage and supply system according to example 1, wherein the demanded fuel delivery characteristics level associated with the fuel-consuming power source is determined in response to an upcoming vehicle operation.

Example 3. The fuel storage and supply system according to example 1 or example 2, wherein the demanded fuel delivery characteristics level associated with the fuel-consuming power source is determined based on transport mission data, the transport mission data containing at least gross combined weight of the vehicle and topology data of an intended route for the transport mission.

Example 4. The fuel storage and supply system of any preceding examples, wherein the controller is configured to receive real-time data on pressure changes in the at least one fuel storage tank volume of the first fuel storage tank arrangement and the at least one fuel storage tank volume of the second fuel storage tank arrangement, and further to adapt the control of any one of the fuel control valve and the corresponding fuel control valve in response to the pressure changes.

Example 5. The fuel storage and supply system of any preceding examples, further comprising a compressor disposed in a bridging fuel conduit extending between the first fuel conduit arrangement and the second fuel conduit arrangement, the bridging fuel conduit being arranged to provide fluid communication between the first fuel conduit arrangement and the second fuel conduit arrangement at a position upstream the fuel control valve and at a position upstream the corresponding fuel control valves.

Example 6. The fuel storage and supply system of example 5, wherein the controller is configured to control the compressor in response to a fuel pressure of the fuel in the at least one fuel storage tank volume of the first fuel storage tank arrangement and a fuel pressure of the fuel in the at least one fuel storage tank volume of the second fuel storage tank arrangement.

Example 7. The fuel storage and supply system of example 5 or example 6, further comprising a heat exchanger disposed in the bridging fuel conduit and configured to regulate a temperature of the pressurized fuel from the compressor.

Example 8. The fuel storage and supply system of examples 1 to 4, further comprising a compressor disposed in a bridging fuel conduit extending between the second fuel conduit arrangement and directly to the first fuel storage tank arrangement, the compressor being configured to receive pressurized fuel from the second fuel storage tank arrangement, increase the pressure of the received pressurized fuel, and direct the increased pressurized fuel to the first fuel storage tank arrangement.

Example 9. The fuel storage and supply system of any preceding examples, wherein the first fuel storage tank arrangement comprises a plurality of fuel storage tank volumes grouped into a first sub-group of fuel tanks and the second fuel storage tank arrangement comprises a plurality of fuel storage tank volumes grouped into a second sub-group of fuel tanks, wherein the controller is configured to select the first sub-group of fuel tanks in response to a higher demanded fuel delivery characteristics level, and select the second sub-group of fuel tanks in response to a lower demanded fuel delivery characteristics level.

Example 10. The fuel storage and supply system of any preceding examples, wherein the demanded fuel delivery characteristics level associated with the fuel-consuming power source is any one of a demanded fuel injection pressure level for the fuel-consuming power source and a demanded fuel flow rate level for the fuel-consuming power source.

Example 11. The fuel storage and supply system of any preceding examples, wherein the fuel is any one of hydrogen gas, methane, and natural gas.

Example 12. The fuel storage and supply system of any preceding examples, wherein the fuel-consuming power source is any one an internal combustion engine and a fuel cell system.

Example 13. The fuel storage and supply system of any preceding examples, wherein the fuel supply characteristics level associated with the at least one fuel storage tank volume of the first fuel storage tank arrangement and the fuel supply characteristics level associated with the at least one fuel storage tank volume of the second fuel storage tank arrangement are determined by a set of sensors arranged in the respective fuel storage tank volumes.

Example 14. A vehicle comprising a fuel storage and supply system according to any one of example 1 to example 13.

Example 15. A method for controlling a fuel storage and supply system for a vehicle, the fuel storage and supply system comprising: a first fuel storage tank arrangement for storing pressurized fuel, the first fuel storage tank arrangement having at least one fuel storage tank volume for the pressurized fuel; a first fuel conduit arrangement configured to be in fluid communication with the first fuel storage tank arrangement, and further configured to be in fluid communication with a fuel-consuming power source; a second fuel storage tank arrangement for storing pressurized fuel, the second fuel storage tank arrangement having at least one corresponding fuel storage tank volume for the pressurized fuel; a second fuel conduit arrangement configured to be in fluid communication with the second fuel storage tank arrangement, and further configured to be in fluid communication with the fuel-consuming power source; a fuel supply control system, the fuel supply control system comprising a first fuel control valve arrangement disposed in the first fuel conduit arrangement and having a fuel control valve configured to regulate a flow of the pressurized fuel in the first fuel conduit arrangement, and a second fuel control valve arrangement disposed in the second fuel conduit arrangement and having a corresponding fuel control valve configured to regulate a flow of the pressurized fuel in the second fuel conduit arrangement; the method comprising controlling, by a processing circuitry of a controller, a flow of fuel through the first fuel conduit arrangement and second fuel conduit arrangement by controlling any one of the fuel control valve and the corresponding fuel control valve in response to a comparison between a fuel supply characteristics level associated with the at least one fuel storage tank volume of the first fuel storage tank arrangement, a fuel supply characteristics level associated with the at least one fuel storage tank volume of the second fuel storage tank arrangement and a demanded fuel delivery characteristics level associated with the fuel-consuming power source.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A fuel storage and supply system (10) for a vehicle (1), the fuel storage and supply system comprising:
- a first fuel storage tank arrangement (12) for storing pressurized fuel (13), the first fuel storage tank arrangement having at least one fuel storage tank volume (12a to 12n) for the pressurized fuel;
- a first fuel conduit arrangement (20) configured to be in fluid communication with the first fuel storage tank arrangement, and further configured to be in fluid communication with a fuel-consuming power source (16);
- a second fuel storage tank arrangement (14) for storing pressurized fuel (13), the second fuel storage tank arrangement having at least one corresponding fuel storage tank volume (14a to 14n) for the pressurized fuel;
- a second fuel conduit arrangement (40) configured to be in fluid communication with the second fuel storage tank arrangement, and further configured to be in fluid communication with the fuel-consuming power source;
- a fuel supply control system (80), the fuel supply control system comprising a first fuel control valve arrangement (30) disposed in the first fuel conduit arrangement and having a fuel control valve (31) configured to regulate a flow of the pressurized fuel in the first fuel conduit arrangement, and a second fuel control valve arrangement (35) disposed in the second fuel conduit arrangement and having a corresponding fuel control valve (36) configured to regulate a flow of the pressurized fuel in the second fuel conduit arrangement; and
- wherein the fuel supply control system (80) further comprises a controller (85) having processing circuitry (82) configured to control flow of fuel through the first fuel conduit arrangement and second fuel conduit arrangement by controlling any one of the fuel control valve and the corresponding fuel control valve in response to a comparison between a fuel supply characteristics level associated with the at least one fuel storage tank volume of the first fuel storage tank arrangement, a fuel supply characteristics level associated with the at least one fuel storage tank volume of the second fuel storage tank arrangement and a demanded fuel delivery characteristics level associated with the fuel-consuming power source.

2. The fuel storage and supply system according to claim 1, wherein the demanded fuel delivery characteristics level associated with the fuel-consuming power source is determined in response to an upcoming vehicle operation.

3. The fuel storage and supply system according to claim 1 or claim 2, wherein the demanded fuel delivery characteristics level associated with the fuel-consuming power source is determined based on transport mission data, the transport mission data containing at least gross combined weight (GCW) of the vehicle and topology data of an intended route for the transport mission.

4. The fuel storage and supply system of any preceding claims, wherein the controller is configured to receive real-time data on pressure changes in the at least one fuel storage tank volume of the first fuel storage tank arrangement and the at least one fuel storage tank volume of the second fuel storage tank arrangement, and further to adapt the control of any one of the fuel control valve and the corresponding fuel control valve in response to the pressure changes.

5. The fuel storage and supply system of any preceding claims, further comprising a compressor (15) disposed in a bridging fuel conduit (23) extending between the first fuel conduit arrangement and the second fuel conduit arrangement, the bridging fuel conduit being arranged to provide fluid communication between the first fuel conduit arrangement and the second fuel conduit arrangement at a position (24) upstream the fuel control valve and at a position (84) upstream the corresponding fuel control valves.

6. The fuel storage and supply system of claim 5, wherein the controller is configured to control the compressor in response to a fuel pressure of the fuel in the at least one fuel storage tank volume of the first fuel storage tank arrangement and a fuel pressure of the fuel in the at least one fuel storage tank volume of the second fuel storage tank arrangement.

7. The fuel storage and supply system of claim 5 or claim 6, further comprising a heat exchanger (19) disposed in the bridging fuel conduit and configured to regulate a temperature of the pressurized fuel from the compressor.

8. The fuel storage and supply system of claims 1 to 4, further comprising a compressor (15) disposed in a bridging fuel conduit (28) extending between the second fuel conduit arrangement and directly to the first fuel storage tank arrangement, the compressor being configured to receive pressurized fuel from the second fuel storage tank arrangement, increase the pressure of the received pressurized fuel, and direct the increased pressurized fuel to the first fuel storage tank arrangement.

9. The fuel storage and supply system of any the preceding claims, wherein the first fuel storage tank arrangement comprises a plurality of fuel storage tank volumes grouped into a first sub-group of fuel tanks and the second fuel storage tank arrangement comprises a plurality of fuel storage tank volumes grouped into a second sub-group of fuel tanks, wherein the controller is configured to select the first sub-group of fuel tanks in response to a higher demanded fuel delivery characteristics level, and select the second sub-group of fuel tanks in response to a lower demanded fuel delivery characteristics level.

10. The fuel storage and supply system of any preceding claims, wherein the demanded fuel delivery characteristics level associated with the fuel-consuming power source is any one of a demanded fuel injection pressure level for the fuel-consuming power source and a demanded fuel flow rate level for the fuel-consuming power source.

11. The fuel storage and supply system of any preceding claims, wherein the fuel is any one of hydrogen gas, methane, and natural gas.

12. The fuel storage and supply system of any preceding claims, wherein the fuel-consuming power source is any one an internal combustion engine and a fuel cell system.

13. The fuel storage and supply system of any preceding claims, wherein the fuel supply characteristics level associated with the at least one fuel storage tank volume of the first fuel storage tank arrangement and the fuel supply characteristics level associated with the at least one fuel storage tank volume of the second fuel storage tank arrangement are determined by a set of sensors arranged in the respective fuel storage tank volumes.

14. A vehicle (1) comprising a fuel storage and supply system (10) according to any one of claim 1 to claim 13.

15. A method for controlling a fuel storage and supply system (10) for a vehicle (1), the fuel storage and supply system comprising: a first fuel storage tank arrangement (12) for storing pressurized fuel (13), the first fuel storage tank arrangement having at least one fuel storage tank volume (12a to 12n) for the pressurized fuel; a first fuel conduit arrangement (20) configured to be in fluid communication with the first fuel storage tank arrangement, and further configured to be in fluid communication with a fuel-consuming power source (16); a second fuel storage tank arrangement (14) for storing pressurized fuel (13), the second fuel storage tank arrangement having at least one corresponding fuel storage tank volume (14a to 14n) for the pressurized fuel; a second fuel conduit arrangement (40) configured to be in fluid communication with the second fuel storage tank arrangement, and further configured to be in fluid communication with the fuel-consuming power source; a fuel supply control system (80), the fuel supply control system comprising a first fuel control valve arrangement (30) disposed in the first fuel conduit arrangement and having a fuel control valve (31) configured to regulate a flow of the pressurized fuel in the first fuel conduit arrangement, and a second fuel control valve arrangement (35) disposed in the second fuel conduit arrangement and having a corresponding fuel control valve (36) configured to regulate a flow of the pressurized fuel in the second fuel conduit arrangement; the method comprising controlling, by a processing circuitry of a controller, a flow of fuel through the first fuel conduit arrangement and second fuel conduit arrangement by controlling any one of the fuel control valve and the corresponding fuel control valve in response to a comparison between a fuel supply characteristics level associated with the at least one fuel storage tank volume of the first fuel storage tank arrangement, a fuel supply characteristics level associated with the at least one fuel storage tank volume of the second fuel storage tank arrangement and a demanded fuel delivery characteristics level associated with the fuel-consuming power source.
